# EUROPÄISCHE PATENTSCHRIFT

(11) **EP 3 099 757 B1**
(45) Veröffentlichungstag und Bekanntmachung des Hinweises auf die Patenterteilung: **24.06.2020**
(21) Anmeldenummer: 15700213.0
(22) Anmeldetag: 09.01.2015
(51) Int. Cl.: C08J 5/12, C08J 5/04, C08J 5/06, B29C 65/16, B29C 65/48, B29C 65/72, B29C 65/78, B32B 37/06, B32B 37/12, B32B 38/16

(54) **VERFAHREN UND VORRICHTUNG ZUM VERKLEBEN MIT KLEBSTOFFSCHICHTEN UNTER ZUHILFENAHME EINES LASERS**
METHOD AND APPARATUS FOR BONDING USING ADHESIVE LAYERS WITH THE AID OF A LASER
PROCÉDÉ ET DISPOSITIF DE COLLAGE DE COUCHES D'ADHÉSIF À L'AIDE D'UN LASER

(30) Priorität: 31.01.2014 DE 102014201778
(43) Veröffentlichungstag der Anmeldung: 07.12.2016
(73) Patentinhaber: Henkel AG & Co. KGaA, 40589 Düsseldorf (DE); Trumpf Laser- und Systemtechnik GmbH, 71254 Ditzingen (DE)
(72) Erfinder: KINZELMANN, Hans-Georg, 50259 Pulheim (DE); BLODAU, Marcel, 47807 Krefeld (DE); SAUTER, Martin, 70825 Korntal-Münchingen (DE); BERGER, Michael, 71254 Ditzingen-Hirschlanden (DE)
(74) Vertreter: dompatent von Kreisler Selting Werner - Partnerschaft von Patent- und Rechtsanwälten mbB
(86) Internationale Anmeldenummer: PCT/EP2015/050341
(87) Internationale Veröffentlichungsnummer: WO 2015/113798

(56) Entgegenhaltungen:
- EP-A1- 0 050 096
- WO-A1-2014/019891
- DE-A1- 3 744 764

## Beschreibung

Die Erfindung betrifft ein Verfahren und eine Vorrichtung zum Verkleben von zwei Substraten, wobei auf ein erstes Substrat ein Klebstoff aufgetragen wird und ein zweites folienförmiges Substrat aus einem thermoplastischen Kunststoff vor dem Verkleben mit dem ersten Substrat durch Erwärmung in einen erweichten Zustand überführt wird.

Die DE 10 2005 028 661 A1 beschreibt ein Verfahren, bei dem Zweischichtfolien aus thermoplastischen Materialien kontinuierlich hergestellt werden können. Dabei wird eine stärkere erste Folie und eine dünnere zweite Folie aus gleichem Material eingesetzt, wobei beide Folien in einem vorgegebenen Verhältnis erwärmt werden, so dass die Oberflächen erweicht und angeschmolzen werden. Diese werden dann unmittelbar danach miteinander verbunden. Die Verwendung eines Klebstoffes zum Verbinden der Materialien wird nicht beschrieben. Ein Verfahren ohne Verwendung eines Klebstoffes hat den Nachteil, dass nur miteinander verträgliche Substrate durch Erwärmung miteinander verbunden werden können.

Die WO 03/040249 A2 beschreibt ein Verfahren zum Kaschieren von Folien auf Formkörper, wobei die Folie zunächst durch elektromagnetische Strahlung erwärmt wird, dann ein Klebstoff auf diese Folie aufgetragen wird und sie schließlich, gegebenenfalls unter Anpressen, mit dem Formkörper verbunden wird. Die Erwärmung der Folie soll ihre Steifigkeit während der Verarbeitung reduzieren und zu einer Verbesserung der Haftung führen.

Die WO 2011/045833 A1 beschreibt ein Verfahren zur Herstellung von Stahlblechen, die mit einer thermoplastischen Folie bedeckt sind. Dabei wird das Stahlblech mit einem Klebstoff beschichtet und die thermoplastische Folie auf die oberflächenbehandelte Seite des Stahlbleches aufgebracht. Anschließend wird der so erhaltene Verbund mittels elektromagnetischer Induktion auf die Erweichungstemperatur der thermoplastischen Folie erwärmt. Ein solches Verfahren hat den Nachteil, dass es nur zum Verbinden von Substraten einsetzbar ist, von denen zumindest eines durch elektromagnetische Induktion erwärmbar ist. Da die Erwärmung nach dem Verbinden beider Substrate durchgeführt wird, muss außerdem gewährleistet sein, dass der Verbund nicht durch die Erwärmung beschädigt wird.

Die zum Zeitpunkt der vorliegenden Anmeldung unveröffentlichte deutsche Patentanmeldung mit dem Aktenzeichen 10 2012 213 397.6 beschreibt ein Verfahren zum Verkleben von zwei Substraten, wobei auf ein erstes Substrat ein Klebstoff mit einem Schichtgewicht unter 2 g/m² aufgetragen wird, dieses Substrat mit einem zweiten folienförmigen Substrat aus einem thermoplastischen Kunststoff zusammengeführt wird. Dabei wird die Oberfläche des zweiten Substrats durch Erwärmen in einen erweichten Zustand überführt. Beide Substrate werden vor, während und/oder unmittelbar nach dem Erwärmen durch Druck miteinander verklebt. Das Erwärmen kann mit Plasma-, Laserbehandlung, Beflammung, Ultraschall, NIR-Strahlung oder IR-Strahlung durchgeführt werden. Konkret wird ein kontinuierliches Laminierverfahren beschrieben, bei dem eine thermoplastische Folie zunächst über eine Strecke von 1 m entlang der Laufrichtung mit einem IR-Strahler erwärmt und dann mit einer anderen mit Klebstoff beschichteten Folie verbunden wird. Ein flächiges Erwärmen einer Folie in einem kontinuierlichen Verfahren kann aber zur Dehnung der Folie entlang der Laufrichtung führen. Nach dem Abkühlen ergeben sich so Spannungen, die zu einer Verformung des Verbundes führen können.

Verfahren zum Herstellen von Folien, die ohne Klebstoffschicht miteinander verbunden werden, sind bekannt. Dabei ist eine spezielle Auswahl der Folienmaterialien und ein entsprechend abgestimmter Verfahrensprozess notwendig. Um eine entsprechende Verklebung zu erzielen, müssen die Oberflächen und die Materialien der zu verbindenden Substrate aufeinander abgestimmt werden.

Es ist außerdem bekannt, flexible Foliensubstrate auf feste Kunststoff- oder Metallsubstrate aufzubringen. Dies kann durch einen Klebstoff geschehen. Es ist jedoch in diesem Falle üblich, eine ausreichend dicke Klebstoffschicht aufzubringen. Werden Substrate mit einer rauen Oberfläche eingesetzt, ist es notwendig, dass eine Klebstoffmenge eingebracht wird, die die Oberfläche vollständig bedeckt. Nur unter dieser Vorraussetzung ist eine vollflächige Verklebung möglich. Damit soll eine Delaminierung durch Wasser, durch Witterung oder andere Einflüsse vermieden werden. Fehlstellen sind dabei häufig durch Blasen zu erkennen. Solche optischen Mängel sind unerwünscht. Es ist bekannt, dass deswegen eine erhöhte Menge an Klebstoff aufgebracht werden muss. Werden flexible Substrate verklebt, ist es bekannt, dass die Klebstoffschicht zum einen eine vollflächige Verklebung sicherstellen soll, zum anderen aber nicht zu dick sein darf, sodass eine ausreichende Flexibilität des verklebten Verbundsubstrates gegeben ist. Anderenfalls können Risse auftreten oder es kann zu einer Delaminierung des Klebstoffverbunds kommen. Weiterhin soll die Klebstoffschicht für viele Zwecke nicht zwischen den Foliensubstraten erkennbar sein.

Es ist weiterhin bekannt, Substrate zu Verkleben und zumindest eines der Substrate zu Erwärmen. Findet die Erwärmung flächig statt, so kann dies zu einer Verformung führen. Findet das Erwärmen nach dem Verkleben statt, so muss der komplette Verbund erwärmt werden, was den Verbund schädigen kann.

Die EP 0 050 09 A1 beschreibt ein Verfahren zum Verkleben von Gegenständen, mit wärmehärtbaren Klebstoffen, dadurch gekennzeichnet, dass die Klebstoffe in Kombination mit einer beim Aushärten der Klebstoffe aufschmelzenden Folie eingesetzt werden und dass die Aushärtungstemperatur des Klebstoffes zumindest gleich hoch gewählt wird wie die Schmelztemperatur der Folie.

Aufgabe der vorliegenden Erfindung ist es deswegen, ein Verfahren und eine Vorrichtung zur Verfügung zu stellen, bei dem Folien auf unterschiedliche Substrate, beispielsweise feste Substrate oder flexible Substrate verklebt werden können. Dabei soll nur eine geringe Klebstoffmenge aufgetragen werden. Weiterhin soll eine vollflächige Verklebung sichergestellt sein. Außerdem soll durch das Verfahren und die Vorrichtung eine schnelle Verklebung erreicht werden, sodass die Weiterverarbeitung der erhaltenen Verbundsubstrate beschleunigt wird. Des Weiteren soll das Verfahren ermöglichen, dass nicht der komplette Verbund thermisch behandelt werden muss und schließlich sollen Verformungen der Substrate als Folge der Erwärmung möglichst vermieden werden.

Diese Aufgabe wird gelöst durch ein Verfahren mit den Merkmalen nach Anspruch 1 sowie eine Vorrichtung zur Durchführung eines solchen Verfahrens mit den Merkmalen nach Anspruch 5.

Vorteilhafte Weiterbildungen sind durch die entsprechenden abhängigen Ansprüche angegeben.

Grundgedanke der Erfindung ist ein Verfahren zum vorzugsweise kontinuierlichen Verkleben von zwei Substraten, wobei auf ein erstes Substrat ein Klebstoff aufgetragen wird, ein zweites folienförmiges Substrat aus einem thermoplastischen Kunststoff in eine Vorschubrichtung transportiert und durch Erwärmung mit elektromagnetischer Strahlung in Form eines Laserstrahls in einen erweichten Zustand überführt wird, wobei der Laserstrahl winkelig hinsichtlich der Vorschubrichtung über das zweite Substrat geführt wird und wobei die mit dem Klebstoff beschichtete Seite des ersten Substrats mit der durch den Laserstrahl bestrahlten Seite des zweiten Substrats verklebt wird.

Als erstes Substrat für das erfindungsgemäße Verfahren kann aus einer Vielzahl von verschiedenen Materialien gewählt werden. Es kann sich um feste Materialien handeln, beispielsweise Holzwerkstoffe, Metalle, beispielsweise Aluminium, Eisen oder Zink, duroplastische oder thermoplastische Kunststoffe, wie Polyvinylchlorid (PVC), Polypropylen (PP), Polystyrol (PS), Acrylnitril-Butadien-Styrol-Copolymeren (ABS), Polyester oder Polyamide, organische Polymere, wie Cellophan, Papier, Karton oder andere Werkstoffe. Es können flexible folienförmige Materialien als erstes Substrat eingesetzt werden. Es können Mehrschichtsubstrate ausgewählt werden, die Oberfläche kann beschichtet, beispielsweise durch Metall-, Oxid- oder Kunststoffbeschichtungen, bedruckt, eingefärbt oder chemisch modifiziert sein. Es können aber auch Substrate aus den Materialien ausgewählt werden, die als zweites Substrat geeignet sind.

Als zweites Substrat sind vorzugsweise flexible Folienmaterialien geeignet, wie solche aus thermoplastischen Kunststoffen in Folienform, beispielsweise Polyolefine, wie Polyethylen (LDPE, LLDPE, metallocen-katalysiertes PE, HDPE) oder Polypropylen (PP, CPP, OPP); Polyvinylchlorid (PVC); Ethylencopolymere, wie Ethylenvinylacetat (EVA), Ethylenacrylatcopolymere (EMA), EMMA, EAA; Polyestern; PLA, Polyamid oder lonomere, wie Ethylen/Acrylsäure-Copolymerisate. Dabei können die Folienmaterialen auch modifiziert sein, z. B. durch Modifizieren der Kunststoffoberfläche mit funktionellen Gruppen, oder es können zusätzliche Komponenten, beispielsweise Pigmente, Farbstoffe in den Folien enthalten sein. Diese thermoplastischen Kunststoffe sollen eine Erweichungstemperatur unter 200 °C aufweisen, insbesondere unter 150 °C. Es kann sich bei dem zweiten Substrat auch um ein Verbundsubstrat handeln, solange die zu verklebende Oberfläche des Verbundsubstrats thermoplastisch beschichtet ist. Es kann sich insgesamt um gefärbte, farblose oder transparente Folien handeln. Insbesondere sind als Polymere Polyolefine und andere Ethylencopolymere geeignet. Unter flexiblen Folien sollen die üblichen dünnen, bahnförmigen Substrate verstanden werden, die beispielsweise als Verpackungsfolie, Dekorfolie, Band oder in ähnlichen Formen bekannt sind.

Die Erweichungstemperatur (oder auch Erweichungspunkt) ist vorzugsweise die gemäß der Norm DIN EN ISO 11357-3:2011 mittel DSC bei einer Aufheizrate von 10 K/min bestimmbare Schmelzpeaktemperatur Tₚₘ.

Eine Vorbehandlung der Oberfläche der Substrate kann durchgeführt werden. Dabei können die Kunststoffoberflächen gereinigt werden und sie können gegebenenfalls vor dem Verkleben noch einer physikalischen, chemischen oder elektrochemischen Vorbehandlung unterworfen werden.

Gemäß der erfinderischen Verfahrensweise wird auf ein erstes Substrat ein Klebstoff aufgetragen. Der Klebstoff kann durch die bekannten Verfahrensweisen aufgetragen werden, beispielsweise Sprühen, Rakeln, Walzenapplikation, Drucken oder andere bekannte Verfahren. Vorzugsweise wird der Klebstoff mit geringer Schichtdicke aufgetragen. Es kann sich bei diesem Substrat um ein festes Substrat handeln, es kann sich ebenso um ein folienförmiges, flexibles Substrat handeln. Der aufzutragende Klebstoff kann den Erfordernissen der Verklebung angepasst werden. Werden wässrige Klebstoffe eingesetzt, ist es zweckmäßig, wenn das Wasser von der Oberfläche abgeführt wird. Werden lösemittelhaltige Klebstoffe ausgewählt, muss die Oberfläche stabil gegen das enthaltene Lösemittel sein. Werden Heißschmelzklebstoffe ausgewählt, soll die Oberfläche durch den möglichen Wärmeeintrag nicht beeinträchtigt werden. Reaktive Klebstoffe können gegebenenfalls eine verbesserte Haftung zu dem Substrat ergeben. Werden strahlenvernetzende Klebstoffe eingesetzt, kann bevorzugt vor dem Zusammenfügen der Substrate eine Bestrahlung der Klebstoffschicht erfolgen, um eine Vernetzung zu erhalten.

Die Verfahrensführung kann in Anpassung an den Klebstoff falls nötig entsprechende Maßnahmen einschließen, wie Trocknen in Trockenzonen, Erwärmen in Erwärmungszonen oder andere unterstützende Maßnahmen. Nach dem Auftragen eines geeigneten Klebstoffs auf das erste Substrat wird das zweite Substrat mit dem ersten Substrat zusammengeführt und verklebt.

Erfindungsgemäß ist es notwendig, dass vor dem Verkleben der Substrate das zweite Substrat an der zu verklebenden Oberfläche erwärmt wird. Dabei soll die Erwärmung bevorzugt so durchgeführt werden, dass nur die Oberfläche erwärmt wird, die mechanischen Eigenschaften des zweiten Substrats sollen möglichst nicht nachteilig beeinflusst werden. Die Erwärmung der zu verklebenden Oberfläche erfolgt berührungslos. Erfindungsgemäß wird für die Erwärmung der Oberfläche elektromagnetische Strahlung in Form eines Laserstrahls genutzt. Dies ermöglicht einen hohen Energieeintrag innerhalb eines kurzen Zeitraums auf einen begrenzten Oberflächebereich. Im Gegensatz zu einer Erwärmung mit einer Lampe wird die Oberfläche des zweiten Substrates also nicht großflächig über einen längeren Zeitraum erwärmt. Im Laufe des Verfahrens werden beide Substrate zur Verklebung zusammengeführt. Das zweite Substrat wird dazu üblicherweise mittels einer Vorschubvorrichtung transportiert und ist so Zugspannungen ausgesetzt. Diese Zugspannungen können zu Verformungen des Substrats führen, wenn größere Bereiche des Substrats erweicht sind. Die Verwendung eines Laserstrahls ermöglicht eine zielgerichtete, fokussierte Erwärmung kurz vor dem Verkleben der Substrate. Verformungen werden dadurch reduziert. Ein weiterer Vorteil der Verwendung eines Laserstrahls besteht darin, dass die an die Umgebung abgegebene Abwärme gering ist. Dies schont die Maschinebauteile und senkt den Energiebedarf. Außerdem arbeiten Laser mit einem vergleichsweise hohen Wirkungsgrad und sind daher sehr energieeffizient. Schließlich lassen sich Kaschiermaschinen außerdem vergleichsweise einfach mit einer Lasereinheit nachrüsten.

Vorzugsweise wird als elektromagnetische Strahlung Infrarotstrahlung (IR-Strahlung) im Wellenlängenbereich von 0,8 bis 25 µm gewählt. Dies umfasst das nahe Infrarot (NIR) im Wellenlängenbereich von 0,8 bis 2,5 µm, was einem Wellenzahlenbereich von 12500 bis 4000 cm⁻¹ entspricht, sowie das mittlere Infrarot (MIR) im Wellenlängebereich von 2,5 bis 25 µm, was wiederum einem Wellenzahlenbereich von 4000 bis 400 cm⁻¹ entspricht. Da die Frequenzen bzw. Wellenzahlen der Schwingungen von Atomen bzw. Atomgruppen ebenfalls in diesen Bereichen liegen, wird MIR- und NIR-Strahlung besonders gut unter Schwingungsanregung absorbiert. Dies führt zu einer energieeffizienten und schnelle Erwärmung des bestrahlten Substrats. Bevorzugt ist dabei der Wellenlängenbereich von 2,5 bis 25 µm, insbesondere von 2,5 bis 11 µm, da in diesem Bereich die Schwingungsfrequenzen der bei Polymeren häufig vertretenen Atomgruppen liegen, wie beispielsweise O-H, N-H, C-H, C=O, C=C, liegen. Übliche thermoplastische Materialien absorbieren IR-Strahlung also bevorzugt in diesem Wellenlängenbereich. Es gibt zahlreiche Lasertypen, die IR-Strahlung im Bereich von 0,8 bis 25 µm emittieren. Darunter sind beispielsweise Gaslaser, wie Kohlenmonoxid- und Kohlendioxid-Laser (CO₂-Laser) zu nennen, aber auch Festkörper-Laser, wie beispielsweise Nd:YAG-, NdCrYAG-, Er:YAG-, Nd:YLF-, Nd:YVO₄-, Nd:Glas-, Tm:YAG-, Yb:YAG-, Ho:Yag- und Cr:ZnSe-Laser. Insbesondere bevorzugt sind Kohlendioxid-Laser. CO₂-Laser arbeiten mit einer Wellenlänge von 9,4 µm und 10,6 µm. Die Verwendung von CO₂-Lasern hat dabei mehrere Vorteile: CO₂-Laser können kontinuierlich betrieben werden. Ihr Wirkungsgrad ist sehr hoch, d.h. sie arbeiten besonders energieeffizient. Die Leistung der Strahlung kann zudem von einigen Milliwatt (mW) bis zu hunderten von Kilowatt (kW) betragen. Des Weiteren sind CO₂-Laser vergleichsweise kostengünstig verfügbar und einfach implementierbar.

Vorzugsweise hat der Laser eine Leistung von weniger als 2000 W, bevorzugt zwischen 500 und 1500 W. Ist die Leistung des Lasers zu hoch, besteht die Gefahr, dass das Substrat durchtrennt wird. Ist die Leistung des Lasers dagegen zu niedrig, wird die Oberfläche des Substrats nicht ausreichend erwärmt.

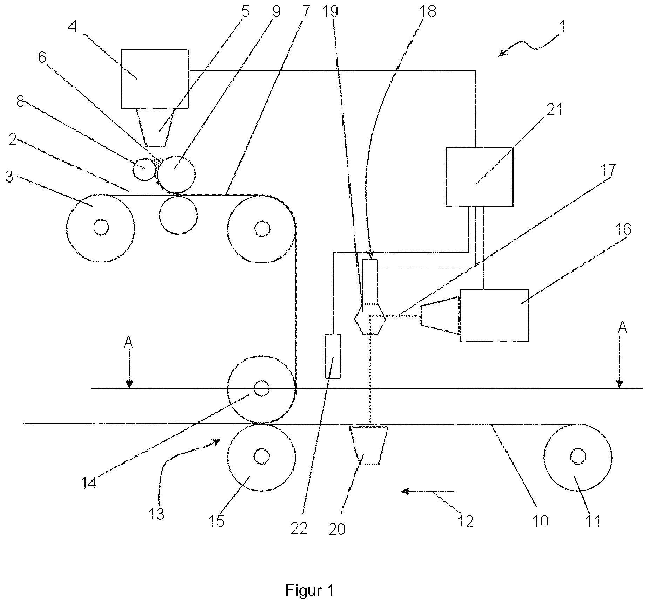

In einer besonderen Ausführungsform wird der Laser kontinuierlich betrieben (CW-Betrieb). In einer weiteren Ausführungsform wird er gepulst betrieben, wobei die Pulsfrequenz so hoch gewählt wird, dass sie einem CW-Betrieb nahezu entspricht, also quasikontinuierlich ist. Unter Umständen kann ein niedrig gepulster Betrieb des Lasers dazu führen, dass die Oberfläche nicht homogen bestrahlt wird. Eine gleichmäßige Erweichung ist damit unter Umständen nicht sichergestellt, was zu Fehlstellen im Verbundkörper führen. Ein kontinuierlicher oder quasikontinuierlicher Betrieb ermöglicht es dagegen, dass jeder Punkt der Oberfläche des zweiten Substrats erwärmt wird und so eine homogene Verklebung entsteht. Ferner ist erfindungsgemäß vorgesehen, den Laserstrahl winkelig hinsichtlich der Vorschubrichtung über das zweite Substrat zu führen, wobei die mit dem Klebstoff beschichtete Seite des ersten Substrats mit der durch den Laserstrahl bestrahlten Seite des zweiten Substrats verklebt wird. Unter der Vorschubrichtung ist im Sinne der vorliegenden Erfindung die Bewegungsrichtung des zweiten Substrats am Ort des auftreffenden Laserstrahls zu verstehen. In Figur 1 entspricht die Vorschubrichtung 12 der Transportrichtung. Unter einer winkligen Führung des Laserstrahls hinsichtlich der Vorschubrichtung wird im Sinne der Erfindung verstanden, dass der Laserstrahl derart geführt wird, dass die Projektionsbewegungsrichtung der Projektion des Laserstrahles zumindest zeitweise winklig zur Vorschubrichtung verläuft. Die Projektion des Laserstrahls auf die Oberfläche verläuft wird also zweitweise in eine andere Richtung als die Vorschubrichtung bewegt.

Durch die winkelige Führung des Laserstrahls über das zweite Substrat wird eine Erwärmung des Substrats direkt vor dem Verkleben der Substrate möglich. Dies bietet mehrere Vorteile im Vergleich zu einer flächigen Bestrahlung, wie sie beispielsweise durch Verwendung einer Infrarotlampe resultiert. Zum einem lässt sich die Zeitspanne zwischen Erwärmung und Verklebung verkürzen. Die unerwünschte Abkühlung des Substrats, die nach der Bestrahlung bis zum Verkleben erfolgt, wird damit verringert. Es muss also weniger Energie aufgewendet werden um diesen Wärmeverlust auszugleichen. Das Verfahren ist damit energieeffizienter und reduziert eine unerwünschte Abgabe der Wärme an die Umgebung. Außerdem wird das zweite Substrat durch die winkelige Führung des Lasers im Vergleich zu einer flächigen Bestrahlung durch beispielsweise eine IR-Lampe nicht vollflächig erweicht. Dies erhöht die Formstabilität des Substrats. Ein großflächig erweichtes zweites Substrat gibt nämlich einer Zugspannung, wie sie beispielsweise durch eine Vorschubvorrichtung ausgeübt werden kann, nach und dehnt sich. Da die Länge des ersten Substrats weitgehend unverändert bleibt, führt dies zu einer Inkongruenz beider Substrate, also zu einem Missverhältnis bezüglich der Abmessungen beider Substrate. Es ist daher zu beobachten, dass sich die Verbundkörper nach dem Abkühlen selbständig krümmen oder gar zusammenrollen. Eine solche Verformung ist im Falle einer winkeligen Führung eines Laserstrahls und der dadurch erreichten Erwärmung entlang einer Linie winkelig zur Vorschubrichtung im Wesentlichen nicht zu beobachten.

Es ist also zweckmäßig, wenn das Erwärmen schnell geschieht und nur ein geringer Bereich der zu verklebenden Oberfläche kurz vor dem Verkleben erwärmt wird. So kann sichergestellt werden, dass die mechanischen Eigenschaften des zweiten Substrats nur wenig oder im Idealfall gar nicht beeinträchtigt werden. Es ist außerdem auch möglich, auf der Rückseite des zweiten Substrats eine Unterstützung zur Beibehaltung der Form vorzusehen. In einer ersten Ausführungsform werden beide Substrate unmittelbar nach dem Erwärmen zusammengeführt und verklebt. Damit die Oberfläche des zweiten Substrats nach dem Erwärmen nicht zu stark abkühlt bevor die Substrate verklebt werden, wird der erwärmte Bereich des zweiten Substrats vorzugsweise nach weniger als 1 s, besonders bevorzugt nach weniger als 0,1 s, insbesondere nach weniger als 0,01 s mit dem ersten Substrat zusammengebracht.

Die Erwärmung der Oberfläche soll auf eine Temperatur geschehen, die bevorzugt ungefähr der Erweichungstemperatur des thermoplastischen Substrates entspricht. Es ist dem Fachmann aber bekannt, dass sich thermoplastische Kunststoffe auch in einem gewissen Temperaturreich um die Erweichungstemperatur in einem erweichten Zustand befinden können. Daher soll die Oberfläche des zweiten Substrates bevorzugt auf eine Temperatur von + / - 40 °C der Erweichungstemperatur des Polymeren an der Oberfläche erwärmt werden, insbesondere bevorzugt +/- 20°C. Bei diesen Temperaturen wird die Oberfläche des Substrates weich und gegebenenfalls unter Druck verformbar oder fließfähig.

In einer bevorzugten Ausführungsform, wird als erstes Substrat entweder ein nicht thermoplastisches Substrat gewählt oder aber ein thermoplastisches Substrat mit einer ausreichend hohen Erweichungstemperatur verwendet wird, sodass sich die Oberfläche des ersten Substrats im Verlauf des Verfahrens nicht erweicht.

Unbeschadet einer Theorie wird angenommen, dass die Oberflächenrauheit der Substratoberfläche durch das Erwärmen und Verpressen mit der klebstoffbehafteten ersten Oberfläche vermindert wird. Dadurch ist eine besonders geringe Schichtdicke des aufgetragenen Klebstoffes zwischen den Substraten möglich. Es kann angenommen werden, dass die Oberfläche geglättet wird. Damit wird weniger Klebstoff für die Verklebung benötigt.

Vorzugsweise wird der Klebstoff mit geringer Schichtdicke aufgetragen. Die Menge des aufgetragenen Klebstoffs beträgt dabei vorzugsweise weniger als 2 g/m², besonders bevorzugt weniger als 1 g/m², weiter bevorzugt weniger als 0,9 g/m², insbesondere weniger als 0,5 g/m². Die Menge des aufgetragenen Klebstoffs beträgt dabei vorzugsweise mehr als 0,05 g/m², insbesondere mehr als 0,2 g/m², betragen. Die optimale Auftragsmenge wird dabei entsprechend der Oberflächenrauheit bzw. Unebenheit des Substrats gewählt, Unebenheiten können beispielsweise durch Bedrucken des Substrats entstehen und hängen vom Druckmuster als auch von der Auftragsmenge der Druckfarbe ab. Durch die Verklebung unter Druck wird trotz der geringen Klebstoffmenge eine flächige Verklebung erzielt.

Es können die üblichen Vorrichtungen zum Zusammenführen und Verkleben angewendet werden. Beispielsweise können Stempel, Rollen, Walzen, Platten zum Zusammenführen der Substrate eingesetzt werden, insbesondere durch Pressen oder Walzen der Substrate gegeneinander. Der Druck auf die Substrate, dargestellt bei einer Zusammenführung durch Walzen, kann beispielsweise zwischen 0,2 bis 15 bar erfolgen. In der besonderen Ausführungsform zum Verkleben von zwei Foliensubstraten sind solche Kaschiervorrichtungen dem Fachmann allgemein bekannt.

Durch das Zusammenführen der mit dem Klebstoff beschichtete Seite des ersten Substrats mit der durch den Laserstrahl bestrahlten und so erwärmten Oberfläche des zweiten Substrats kann auch die dünne Schicht des Klebstoffs erwärmt werden. Das kann zu einem schnelleren Haftungsaufbau und zu einer schnelleren Vernetzung führen.

Für das erfindungsgemäße Verfahren kommen vorzugsweise flüssig auftragbare Klebstoff zum Einsatz. Es kann sich um wässrige Dispersionen, lösemittelhaltige nicht reaktive oder reaktive Klebstoffe handeln, es können lösemittelfreie flüssige oder feste schmelzbare Klebstoffe eingesetzt werden. Es kann sich um 1-Komponentensysteme oder um 2-Komponentensysteme handeln.

Beispiele für geeignete Klebstoffe sind solche auf Basis von thermoplastischen Polymeren, wie Polyurethanen, EVA, Polyacrylaten; lösemittelhaltige Klebstoffe, wie Acrylatklebstoffe, 1K-oder 2K-Polyurethanklebstoffe, Silan-vernetzende Klebstoffe; reaktive Schmelzklebstoffe, wie 1K-PU-Klebstoffe; oder lösemittelfreie 1K- oder 2K-PU-Klebstoffe, Silan-Systeme oder strahlenvernetzbare Klebstoffe.

Erfindungsgemäß ist es zweckmäßig, wenn der Klebstoff eine niedrige Viskosität aufweist. Die Viskosität eines geeigneten Klebstoffs beim Auftragen beträgt beispielsweise bis 10000 mPas, bevorzugt bis 5000 mPas (gemessen mit einem Brookfield-Viskosimeter; ISO 2555:2000). Die Messtemperatur wird der Auftragstemperatur angepasst. Für bei Raumtemperatur flüssige Klebstoffe wird die Viskosität beispielsweise bei 20 bis 40°C bestimmt, bei Schmelzklebstoffen kann die Messtemperatur bei 100 bis 150°C liegen. Bei höher viskosen Klebstoffen kann beispielsweise auch von 40 bis 100°C gemessen werden. Wässrige oder lösemittelhaltige Klebstoffe besitzen häufig eine niedrige Viskosität bis 500 mPas, Schmelzklebstoffe häufig eine Viskosität über 1000 mPas.

Nach dem erfindungsgemäßen Verfahren können Verklebungen auf einem weiten Anwendungsgebiet durchgeführt werden. Werden feste Substrate mit folienförmigen Substraten verklebt, wird auf das gegebenenfalls vorbehandelte feste Substrat der Klebstoff aufgetragen. Auf die so beschichtete Oberfläche wird als zweites Substrat eine Folie mit einer Oberfläche aus thermoplastischen Polymeren aufgebracht. Durch die Erwärmung der Oberfläche der thermoplastischen Folie mittels besagter elektromagnetischer Strahlung, wird diese an der Oberfläche aufgeweicht. Durch Anwendung von Druck beim Verkleben kann sichergestellt werden, dass eine besonders glatte Oberfläche des zu verklebenden thermoplastischen Substrates erhalten wird. Blasen und Delaminierungen werden dabei nicht beobachtet. Eine andere Ausführungsweise arbeitet mit einem flexiblen ersten Substrat, auf dem ein Klebstoff in dünner Schicht aufgetragen wird. Auf diese Oberfläche wird dann ebenfalls unter Druck ein zweites Foliensubstrat aufgebracht, das eine Schicht aus thermoplastischen Polymeren an der Oberfläche aufweisen soll. Durch Erwärmen und Zusammenfügen mit dem ersten Substrat wird auch hier sichergestellt, dass eine besonders glatte Oberfläche des zweiten Substrates erhalten wird.

Das Zusammenfügen der mit Klebstoff beschichteten Seite des ersten Substrats mit der durch den Laserstrahl bestrahlten Seite des zweiten Substrats kann beispielsweise durch Druck unterstützt werden. Dieser kann beispielsweise von 0,2 bis 16 bar ausgeübt auf Anpresswalzen betragen. Erfindungsgemäß ist es möglich, mit dünnen Auftragsgewichten von Klebstoffen eine vollflächige Verklebung der Substrate zu erzielen.

Als besonders vorteilhaft hat sich ein erfindungsgemäßes Verfahren erwiesen, bei dem die Substrate mit einer Geschwindigkeit von mehr als 10 m/min, insbesondere mehr als 100 m/min durch die Walzen transportiert werden.

In einer vorteilhaften Weiterbildung werden beide Substrate mittels Walzen, wie oberhalb beschrieben, gegeneinander kaschiert, wobei der Laserstrahl vor dem Walzenspalt, bevorzugt weniger als 10 cm, insbesondere bevorzugt weniger als 1 cm auf das zweite Substrat trifft.

Besonders vorteilhaft ist eine Stärke der Auftragslinie auf dem zweiten Substrat mit einer Breite im Bereich von 0,1 bis 20 mm, bevorzugt von 1 bis 10 mm.

Durch die hohe Geschwindigkeit, den kurzen Abstand des Laserstrahls zum Walzenspalt und die geringe Stärke der Auftragslinie wird die Zeitspanne zwischen Erwärmung und Verklebung stark verkürzt. Wie bereits erörtert, führt eine Verringerung der Zeitspanne zwischen Bestrahlung und Verklebung zu einer Verbesserung der Energieeffizienz und die resultierenden Verbundkörper zeigen im Wesentlichen keine unerwünschten Verformungen.

Nach dem erfindungsgemäßen Verfahren wird der Laserstrahl über einen um eine Drehachse drehbar gelagerten Polygonspiegel umgelenkt, gegebenenfalls vorher und/oder anschließend durch Fokussierungsmittel fokussiert und über das zweite Substrat entlang einer Linie geführt wird. Die Verwendung eines Polygonspiegels ermöglicht eine sehr schnelle Bewegung des Laserstrahls über die Substratoberfläche.

Die Drehzahl des Polygonrads ist insbesondere abhängig von der Bandgeschwindigkeit, dem Strahldurchmesser, dem Linienabstand und dem Abstand vom Polygonrad zum Substrat zu wählen. In einer Ausführungsform hat es sich als besonders vorteilhaft herausgestellt, wenn der drehbar gelagerte Polygonspiegel mit einer Geschwindigkeit von mehr als 300, insbesondere mehr als 1000 Umdrehungen pro Minute um die besagte Drehachse rotiert.

Ferner ist es von Vorteil, die beiden Substrate kontinuierlich zu verkleben, wobei der Laserstrahl derart über das Substrat geführt wird und derart auf die Vorschubgeschwindigkeit abgestimmt ist, dass die Zeitspanne zwischen dem Auftreffen des Laserstrahls und der anschließenden Verklebung für jeden Punkt der zu verklebenden Oberfläche des zweiten Substrats im Wesentlichen gleich ist. Dadurch wird sichergestellt, dass auch die Erwärmung und infolgedessen auch die Erweichung für jeden Punkt der zu verklebenden Oberfläche des zweiten Substrats im Wesentlichen gleich sind.

Es hat sich dabei als vorteilhaft herausgestellt, den Laserstrahl im Wesentlichen linienförmig und/oder im Wesentlichen orthogonal zur Vorschubrichtung über das zweite Substrat zu führen. Durch die Bewegung des durch den Laserstrahl erzeugten Punktes auf der Substratoberfläche entlang der Projektionsbewegungsrichtung resultiert eine Projektionslinie mit einer durch den Querschnitt des Laserstrahls bestimmten Projektionsbreite. Durch eine geeignete Wahl von Projektionsgeschwindigkeit, Vorschubgeschwindigkeit und Projektionsbreite kann sichergestellt werden, dass das zweite Substrat an allen Punkten auf einer Linie orthogonal zur Vorschubsrichtung dieselbe Temperatur aufweist. Besonders vorteilhaft ist eine Führung des Laserstrahls derart, dass der Vektor der Einfallsrichtung des Laserstrahls und der Vektor der Fertigungsrichtung einen Winkel von weniger als 120°, bevorzugt weniger als 90 °C, insbesondere bevorzugt weniger als 60 ° bilden. Somit kann die Oberfläche des zweiten Substrats möglichst kurz vor der Verklebung mit dem ersten Substrat bestrahlt werden.

Offenbart hierin ist auch ein Verbundsubstrat oder ein Verbundkörper hergestellt nach dem erfindungsgemäßen Verfahren. Dabei kann das erste Substrat ein starres oder festes Substrat sein, beispielsweise ein Formkörper aus unterschiedlichen Materialien. Diese weisen vorzugsweise nur eine geringe Oberflächenrauheit aufweisen. Als weitere Ausführungsform kann das erste Substrat aus einem flexiblen Substrat bestehen, dabei sind Material und Eigenschaften dieses flexiblen Substrates in weiten Grenzen variierbar. Es kann sich auch um das gleiche Material wie das des zweiten Substrats handeln. Vorzugsweise sind beide Substrate jedoch unterschiedlich. Das erste Substrat kann gegebenenfalls auch bearbeitet oder bedruckt sein. Durch den Auftrag einer dünnen Klebstoffschicht wird die Oberfläche des ersten Substrates nicht beeinflusst. Ein möglicher Gehalt an Wasser, an organischen Lösemitteln oder der geringe Gehalt an Wärme des aufgetragenen Klebstoffes ist so ausgewählt, dass die Eigenschaften der Oberfläche des ersten Substrates im Wesentlichen nicht beeinträchtigt werden.

Als zweites Substrat des Verbundgegenstandes wird ein Substrat ausgewählt, das mindestens auf der zu verklebenden Oberfläche aus thermoplastischen Polymeren besteht. Es kann sich um eine Einschichtfolie handeln, es können aber auch Mehrschichtfolien ausgewählt werden. Das Verbundsubstrat wird durch Zusammenfügen und Verpressen der beiden unterschiedlichen Substrate erhalten.

Die Verbundsubstrate weisen eine hohe Festigkeit der verklebten Einzelsubstrate auf. Durch die vorzugsweise geringe Schichtdicke der Klebstoffschicht wird eine hohe Kohäsion des Klebstoffes sichergestellt. Weiterhin ist durch die geringe Schichtdicke des Substrates eine verbesserte Flexibilität der Klebstoffschicht gegeben. Deswegen können die Verbundsubstrate eine hohe Stabilität gegen elastische Verformungen aufweisen.

Weiterhin wird die Verwendung eines beschriebenen Verbundkörpers hergestellt nach dem erfindungsgemäßen Verfahren zur Verpackung von Lebensmitteln offenbart.

Ein weiterer Grundgedanke der vorliegenden Erfindung ist die Bereitstellung einer Vorrichtung insbesondere zur Durchführung eines erfindungsgemäßen Verfahrens zum vorzugsweise kontinuierlichen Verkleben eines ersten vorzugsweise folienförmigen Substrats mit einem zweiten folienförmigen Substrat aus einem thermoplastischen Kunststoff, aufweisend eine Auftragsvorrichtung zum Auftragen eines Klebstoffes auf das erste Substrat; zumindest eine Vorschubeinrichtung zum Transportieren zumindest des zweiten Substrates in eine Vorschubrichtung; eine Heizvorrichtung zum Erwärmen der Oberfläche des zweiten Substrates, die mit dem ersten Substrat verklebt wird, wobei die Heizvorrichtung derart ausgelegt und angeordnet ist, dass das zweite Substrat durch Erwärmen in einen erweichten Zustand überführbar ist, wobei die Heizvorrichtung einen eine elektromagnetische Strahlung in Form eines Laserstrahls emittierenden Laser als Wärmequelle aufweist und wobei der Laserstrahl zur Erwärmung des zweiten Substrates derart geführt wird, dass dessen Projektion auf der Oberfläche in einer Relativbewegung hinsichtlich der Oberfläche in eine Projektionsbewegungsrichtung bewegt wird, wobei die Projektionsbewegungsrichtung zumindest zeitweise winklig zur Vorschubrichtung vorgesehen ist, um bei einer Bewegung des zweiten Substrates in Vorschubrichtung eine vorzugsweise flächige Erwärmung des zweiten Substrats vor dem Verkleben der beiden Substrate zu ermöglichen sowie eine Andruckvorrichtung zum Andrücken der beiden Substrate nach dem Erwärmen des zweiten Substrates.

Hinsichtlich der sich eignenden und bevorzugt angewendeten Substrate sowie des Klebstoffes wird auf die ausführlichen Ausführungen oberhalb verwiesen, die in dieser Hinsicht die die Vorrichtung betreffende Offenbarung ausdrücklich ergänzen soll.

Als Vorschubeinrichtung können alle sich eignenden, dem Fachmann bekannten Vorschubmöglichkeiten zum Einsatz kommen, die es erlauben, insbesondere das zweite Substrat in eine Vorschubrichtung zu bewegen. Unter der Vorschubrichtung ist im Sinne der vorliegenden Erfindung die Bewegungsrichtung des zweiten Substrats am Ort des auftreffenden Laserstrahls zu verstehen. Vorzugsweise ist die Vorschubeinrichtung derart gestaltet, dass sie einen kontinuierlichen Vorschub des zweiten Substrates in Vorschubrichtung ermöglicht. Zudem kann eine weitere Vorschubeinrichtung für das erste Substrat vorgesehen werden, welche ebenfalls bevorzugt einen kontinuierlichen Vorschub ermöglicht. In diesem Fall sind beide Vorschubeinrichtungen vorzugsweise derart gekoppelt, oder über eine Steuerung, insbesondere über eine Steuereinheit verbunden, dass ein gleichmäßiger Vorschub beider Substrate gewährleistet werden kann. In einem Ausführungsbeispiel kann der Vorschub der Substrate auch durch die noch zu erläuternde Andruckvorrichtung ermöglicht werden, die in diesem Fall vorzugsweise rollen- oder walzenartig ausgestaltet sind und einen kontinuierlichen Einzug und somit einen Vorschub der Substrate ermöglichen, vorzugsweise erfolgt in einem solchen Fall ein Vorschub der Substrate durch die Rollen oder Walzen mit einer Geschwindigkeit von mehr als 10 m/min, insbesondere mehr als 100 m/min.

Die Heizvorrichtung weist erfindungsgemäß den eine elektromagnetische Strahlung in Form eines Laserstrahls emittierenden Laser als Wärmequelle auf. Zudem können noch weitere Elemente Teil der Heizvorrichtung sein, insbesondere Fokussiereinrichtungen für den Laserstrahl und andere dem Fachmann bekannte Peripherie- und Unterstützungsgeräte. Der Laser wir dabei vorzugsweise kontinuierlich und nicht gepulst betrieben. Hinsichtlich der bevorzugten Kennwerte und Eigenschaften des Lasers, wie insbesondere der Wellenlängenbereich der emittierten Strahlung, Art des Lasers, bevorzugte Leistungsbereiche wird auf die ausführlichen Ausführungen oberhalb verwiesen, die in dieser Hinsicht die die Vorrichtung betreffende Offenbarung ausdrücklich ergänzen sollen.

Erfindungsgemäß ist darüber hinaus vorgesehen, dass der Laserstrahl zur Erwärmung des zweiten Substrates derart geführt wird, dass dessen Projektion auf der Oberfläche in einer Relativbewegung hinsichtlich der Oberfläche in eine Projektionsbewegungsrichtung bewegt wird. Der Laserstrahl wird demnach derart bewegt oder abgelenkt, dass sich dessen Projektion über die Oberfläche des zweiten Substrates unabhängig von einer Bewegung des Substrates in Vorschubrichtung bewegt. Diese aktive Projektionsbewegung des Laserstrahls über besagte Oberfläche wird also durch die aktive Bewegung oder Ablenkung des Strahles erreicht.

Ferner ist erfindungsgemäß vorgesehen, dass der Laserstrahl derart geführt wird, dass die Projektionsbewegungsrichtung der Projektion des Laserstrahles zumindest zeitweise winklig zur Vorschubrichtung vorgesehen ist. Darunter ist eine Projektionsbewegung zu verstehen, bei der die Projektion des Laserstrahls auf der Oberfläche zumindest zweitweise in eine andere Richtung als die Vorschubrichtung bewegt wird. In diesem Fall kommt es bei einem Vorschub des zweiten Substrats in Vorschubrichtung somit einerseits zu einer aktiven Projektionsbewegung über die Oberfläche durch Ablenkung oder Bewegung des Laserstrahls über die Oberfläche winklig zur Vorschubrichtung sowie zu einer passiven Projektionsbewegung durch den Vorschub des zweiten Substrates selbst. Diese beiden Bewegungen können insbesondere bei geeigneter Auslegung und Steuerung eine Erwärmung des zweiten Substrats direkt vor dem Verkleben der Substrate ermöglichen. Selbst eine flächige, insbesondere eine vollflächige Erwärmung der Oberfläche des zweiten Substrats kann ermöglicht werden.

Bevorzugt wird der Laserstrahl dabei derart geführt oder abgelenkt, dass die Projektion linienförmig über die Oberfläche bewegt wird. Besonders bevorzugt ist zudem eine Bewegung der Projektion im Wesentlichen orthogonal zur Vorschubrichtung. Alternativ kann sich eine derartige vorzugsweise linienförmige Bewegung der Projektion über die Oberfläche als sinnvoll erweisen, bei dem der Winkel zwischen dem Bewegungsvektor der Projektion und der Vorschubrichtung derart gewählt ist, dass insbesondere bei Erreichen der Andruckvorrichtung alle von dem Laserstrahl erfassten Bereiche der Oberfläche auf einer Linie orthogonal zur Vorschubrichtung dieselbe Temperatur aufweisen. Erfindungsgemäß ist ferner eine Andruckvorrichtung vorgesehen, die als oberhalb beschriebe, übliche Vorrichtungen zum Zusammenführen und Verkleben ausgestaltet sein kann. Beispielsweise können Stempel, Rollen, Walzen, Platten zum Zusammenführen der Substrate eingesetzt werden, insbesondere durch Pressen oder Walzen der Substrate gegeneinander. Der Druck auf die Substrate, dargestellt bei einer Zusammenführung durch Walzen, kann beispielsweise zwischen 0,2 bis 15 bar erfolgen. In der besonderen Ausführungsform zum Verkleben von zwei Foliensubstraten sind solche Kaschiervorrichtungen dem Fachmann allgemein bekannt.

Bei der Verwendung von Walzen oder Rollen hat sich eine derartige Gestaltung und Einstellung der Andruckvorrichtung als zweckmäßig erwiesen, dass die Substrate mit einer Geschwindigkeit von mehr als 10 m/min, insbesondere mehr als 100 m/min durch die Rollen oder Walzen transportiert werden.

Erfindungsgemäß ist ferner eine Strahlführungseinheit vorgesehen, die den Laserstrahl ablenkt und geeignet ist, den Laserstrahl zur über die Oberfläche des zweiten Substrates zu führen. Demnach kommt die Strahlführung für oberhalb beschriebene aktive Projektionsbewegung zum Einsatz. Die Strahlführungseinheit kann sich dabei auch selbstverständlich unmittelbar an die Lasereinheit anschließen und somit Teil der Heizvorrichtung sein. Die Strahlführungseinheit kann zudem ein oder mehrere Fokussiereinrichtungen aufweisen, um den Laserstrahl zu fokussieren. Alternativ kann jedoch auch eine gesonderte Fokussiereinrichtung vorgesehen werden, die vollständig losgelöst von Heizvorrichtung und/oder Strahlführungseinheit ist. Die Strahlführungseinheit kommt wie bereits eingangs erwähnt insbesondere zur oberhalb beschriebenen aktiven Projektionsbewegung zum Einsatz, bei der die Projektion des Laserstrahls zumindest zeitweise winklig zur Vorschubrichtung über die Oberfläche des zweiten Substrates bewegt wird. Die Strahlführungseinheit kann unterschiedliche im Stand der Technik bekannte und sich für den speziellen Einsatzzweck eignende Elemente umfassen, die eine Ablenkungs- und Führungsmöglichkeit für den Laserstrahl bereitstellen können. So ist für eine Bewegung der Projektion in eine räumliche Dimension, also beispielsweise bei der oberhalb beschriebenen linienförmigen Bewegung, der Einsatz eines Galvanometerantriebs, eines sich vorzugsweise kontinuierlich drehenden Spiegels oder eines vorzugsweise sich kontinuierlich drehendes Spiegelprismas denkbar. Letztgenanntes ist auch als Polygonspiegel bekannt. Ferner ist auch eine zweidimensionale Bewegung der Projektion möglich, so dass hier insbesondere zwei Spiegel zum Einsatz kommen können, die in zwei Richtungen auslenkbar sind. Alternativ ist der Einsatz von zwei orthogonal drehbaren und benachbart stehenden Spiegel denkbar, über die der Laserstrahl reflektiert wird.

In einer bevorzugten Ausführungsform kommt ein drehbar gelagerter Polygonspiegel zur Umlenkung des Laserstrahls zum Einsatz, um den Laserstrahl zur Erwärmung über die Oberfläche des zweiten Substrates zu führen und somit die Projektion des Laserstrahles über die Oberfläche zu bewegen. Hierdurch ist besonders einfach die oberhalb beschriebene, bevorzugt linienförmige Bewegung der Projektion über die Oberfläche möglich. Dabei ist der Polygonspiegel vorzugsweise derart gestaltet, dass der Laserstrahl immer in derselben Richtung von jeweils einer Seite zu einer gegenüberliegenden Seite des zweiten Substrates winklig zur Vorschubrichtung über dessen Oberfläche geführt wird. Die Bewegung der Projektion erfolgt dabei bei einem Vorschub des zweiten Substrates im bevorzugten Ausführungsbeispiel immer in parallelen Linien von der ersten Seite in Richtung der zweiten Seite winklig zur Vorschubrichtung des zweiten Substrates. Dabei ist die Bewegung wie oberhalb beschrieben vorzugsweise orthogonal zur Vorschubsrichtung vorgesehen.

Mit einer alternativen bevorzugten Ausführungsform soll insbesondere für eine kontinuierliche Verklebung der Substrate erreicht werden, dass alle von dem Laserstrahl erfassten Bereiche der Oberfläche vor Erreichen der Andruckvorrichtung auf einer Linie orthogonal zur Vorschubrichtung dieselbe Temperatur aufweisen. Hierbei wird insbesondere mittels des besagten drehbar gelagerten Polygonspiegels eine linienförmige Projektionsbewegung über die Oberfläche in oben beschriebener paralleler Art von jeweils einer Anfangsprojektion auf der ersten Seite in Richtung einer Endprojektion an der gegenüberliegenden zweiten Seite winklig zur Vorschubrichtung eingestellt, wobei der Winkel in Abhängigkeit von der Breite der Projektion, der Zeitspanne zwischen dem Erreichen zweier benachbarter Anfangspunkte durch den Laserstrahl und der Geschwindigkeit des kontinuierlichen Vorschubs des zweiten Substrates derart gewählt ist, dass das zweite Substrat nach der Bestrahlung durch den Laserstrahl an allen Punkten auf eine Linie orthogonal zur Vorschubrichtung dieselbe Temperatur aufweisen. Dabei sind Führung des Laserstrahls sowie dessen Breite vorzugsweise derart gewählt, dass kein Punkt auf der Oberfläche doppelt bestrahlt wird. In einer vorteilhaften Weiterbildung entspricht die Form der Projektion nach einer linienförmigen und winkligen Bewegung von einer Anfangsprojektion auf der ersten Seite in Richtung der Endprojektion an der zweiten Seite des Substrates einem Parallelogramm, wobei die in Projektionsrichtung gesehene Vorderseite an dem Randbereich der zweiten Seite des Substrates mit der Hinterseite an dem Randbereich der ersten Seite orthogonal zur Vorschubsrichtung fluchtet.

Beispielhaft ist eine erfindungsgemäße Vorrichtung, mit welcher ein erfindungsgemäßes Verfahren durchgeführt werden kann, mit den beiliegenden Figuren beschrieben.

Darin zeigt
Figur 1 eine schematische Ansicht einer erfindungsgemäßen Vorrichtung,
Figur 2 eine Schnittansicht durch die Schnittlinie A - A der Vorrichtung aus Figur 1 in einer Momentaufnahme,
Figur 3 die Schnittansicht aus Figur 2 nach dem Ablauf eines Zeitraumes t.
Figur 4 die Schnittansicht aus Figur 2 nach dem Ablauf eines Zeitraumes t2.

Figur 1 zeigt eine schematische Ansicht einer erfindungsgemäßen Vorrichtung 1 zum kontinuierlichen Verkleben eines ersten Substrates 2 in Form einer Kaschierfolie mit einem zweiten folienförmigen Substrat 10 aus einem thermoplastischen Kunststoff. Das erste folienförmige Substrat 2 befindet sich dabei auf einer Vorratsrolle 3 und wird mittels einer nicht näher beschriebenen Vorschubvorrichtung, die insbesondere einen Antrieb sowie mehrere Umlenk und-/oder Führungsrollen beinhalten kann, zu einer Klebstoffeinheit 4 geführt, an der ein Klebstoff 6 flächig im Walzenauftrag auf eine Seite des ersten Substrates aufgebracht wird. Der Klebstoff 6 wird über eine Auftragsdüse 5 ausgegeben und sammelt sich im Zwischenraum zwischen einer Auftragswalze 9 und einer Dosierwalze 8. Mittels der Auftragswalze 9 wird ein Klebstofffilm 7 auf das erste Substrat 2 aufgebracht, wobei mittels der Dosierwalze 8 die aufzubringende Menge an Klebstoff 6 einstellbar ist. Im gezeigten Ausführungsbeispiel wird ein Klebstofffilm mit einem Schichtgewicht im Bereich von 0,05 g/m² bis 0,9 g/m² aufgebracht. Die Klebstoffeinheit 4 kann ferner einen nicht abgebildeten Vorratsbehälter für den Klebstoff in kaltem Zustand sowie eine nicht abgebildete Heizvorrichtung zum Erhitzen und Aufschmelzen des Klebstoffes beinhalten.

Dergleichen Bauteile sind dem Fachmann bekannt. Selbstverständlich ist es auch möglich die genannten sowie weiteren Bauteile dezentral bereitzustellen, also nicht als Teil der Klebstoffeinheit 4 vorzusehen. Das mit dem Klebstofffilm 7 versehene erste Substrat 2 wird im Anschluss in Richtung einer Andrückeinheit 13 zum flächigen Andrücken der mit Klebstofffilm 7 versehenen Seite des ersten Substrates 2 auf das zweite Substrat 10 geführt.

Das zweite Substrat 10 wiederum befindet sich dabei auf einer Vorratsrolle 11 und wird mittels ebenfalls mit einer nicht näher beschriebenen Vorschubeinrichtung in eine Vorschubrichtung 12 der Andrückeinheit 13 zugeführt. Unmittelbar vor dem Erreichen der Andrückeinheit 13 wird die Oberfläche des zweiten Substrates 10, welche mit dem Klebefilm 7 flächig in Kontakt kommen soll, mittels einer Heizvorrichtung erwärmt. Im gezeigten Ausführungsbeispiel erfolgt der Energieeintrag zum Erwärmen des zweiten Substrates 10 mittels eines Laserstrahls 17 in einem Wellenlängenbereich zwischen 9 bis 11 µm, welcher von einer Lasereinheit 16 emittiert wird. Die Lasereinheit 16 umfasst im gezeigten Ausführungsbeispiel einen CO₂-Laser, wobei der CO₂-Laser eine Leistung im Bereich zwischen 500 und 1500 W aufweist. Zudem wird der CO₂-Laser kontinuierlich oder quasikontinuierlich betrieben. Zur Führung des Laserstrahles 17 über die Oberfläche des zweiten Substrates 10 ist eine Umlenkeinheit 18 vorgesehen, die insbesondere einen drehbar gelagerten Polygonspiegel 19 umfasst. Der Polygonspiegel 19 weist einen Antrieb in Form eines Servomotors auf, um den Polygonspiegel 19 mit einer gewünschten DrehGeschwindigkeit anzutreiben. Zudem kann die Umlenkeinheit eine nicht gezeigte Fokussiereinrichtung umfassen. Die Umlenkeinheit 18 stellt insbesondere mit dem drehbar gelagerten Polygonspiegel 19 eine Möglichkeit bereit, den Laserstrahl 17 umzulenken und über die Oberfläche des zweiten Substrates 10 zu führen, dass dessen Projektion in einer Relativbewegung hinsichtlich der Oberfläche in ein Projektionsbewegungsrichtung über die Oberfläche des zweiten Substrates 10 bewegt wird, um eine Erwärmung des zweiten Substrates 10 zu ermöglichen, selbiges in einen erweichten Zustand zu überführen. Dabei ist die Umlenkeinheit 18 derart gestaltet, dass sie den Laserstrahl 17 zumindest zeitweise derart führt, dass die Projektionsbewegungsrichtung winklig zur Vorschubrichtung 12 über die Oberfläche des zweiten Substrates 10 verläuft, um bei einer Bewegung des zweiten Substrates 10 in Vorschubrichtung 12 eine flächige Erwärmung der Oberfläche zu ermöglichen. Um die gewünschte Temperatur der Oberfläche des zweiten Substrates 10 zu erhalten, ist zudem ein Temperatursensor 22 vorgesehen, der nach dem Führen des Laserstrahls 17 über die Oberfläche und die damit einhergehenden Erwärmen selbiger die Temperatur der Oberfläche unmittelbar vor Erreichen der Andrückeinheit 13 misst. Ferner ist eine Strahlfalle 20 vorgesehen, um möglicherweise durch das zweite Substrat 10 durch gehende Laserstrahlung kontrolliert blocken zu können. Zur Steuerung der Vorrichtung 1 sind sowohl die Vorschubeinrichtungen, die Klebstoffeinheit 4, die Lasereinheit 16, die Umlenkeinheit 18 und der Temperatursensor 22 an eine Steuereinheit 21 angeschossen. Selbige kann insbesondere Vorschubgeschwindigkeiten der Substrate 2, 10 und die Führungsgeschwindigkeit des Laserstrahles 17 über die Oberfläche des zweiten Substrates 10 aufeinander abstimmen, so dass die gewünschte Temperatur der Oberfläche des zweiten Substrates 10 vorliegt.

Im weiteren Verlauf wird die mittels des Laserstrahls 17 in den erweichten Zustand überführte Oberfläche des zweiten Substrates 10 in der Andrückeinheit mit der mit dem Klebstofffilm 7 versehenen Seite des ersten Substrates 2 in Kontakt gebracht. Hierfür durchlaufen beide Substrate 2, 10 die Andrückeinheit 13 wobei mittels einer Andruckwalze 14 und einer korrespondierenden Lagerwalze 15 beide Substrate 2, 10 zusammengedrückt werden.

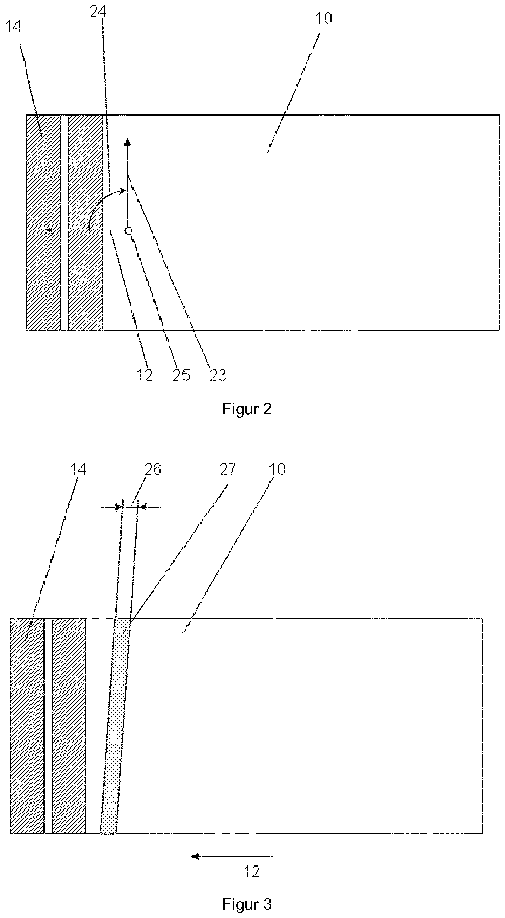

Figur 2 zeigt eine Schnittansicht durch die Schnittlinie A - A der Vorrichtung aus Figur 1, wobei sich der Schnitt durch die Andruckwalze 14 erstreckt und die Schnittfläche parallel zur Oberfläche des zweiten Substrates 10 verläuft. Die Vorrichtung 1 ist hierbei in einer fotografischen Momentaufnahme gezeigt, um die Bestrahlung des zweiten Substrates 10 durch die oberhalb beschriebene Lasereinheit 16 und der Umlenkeinheit 18 zu verdeutlichen. Der Laserstrahl 17 trifft auf die Oberfläche des zweiten Substrates 10 in einer Projektion 25 auf, wobei der Energieeintrag eine Erwärmung der Oberfläche zur Folge hat. Zur weiteren Erwärmung der Oberfläche wird der Laserstrahl 17 mittels der Umlenkeinheit 18 derart umgelenkt, dass sich dessen Projektion 25 über die Oberfläche in eine Projektionsbewegungsrichtung 23 bewegt. Diese aktive Projektionsbewegung relativ zur Oberfläche ist dabei unabhängig von einer Bewegung des Substrates in Vorschubrichtung 12. Im gezeigten Ausführungsbeispiel verläuft die Projektionsbewegungsrichtung 23 im Wesentlichen orthogonal zur Vorschubsrichtung 12.
Figur 3 zeigt die Schnittansicht aus Figur 2 nach dem Ablauf eines Zeitraumes t1, bei dem einerseits der Laserstrahl 17 derart über das zweite Substrat 10 geführt worden ist, dass in Figur 2 gezeigte Projektion 25 von der ersten Seite des Substrates 10 bis zur gegenüberliegenden zweiten Seite relativ zur Oberfläche mittels oberhalb beschriebener aktiven Projektionsbewegung bewegt worden ist. Andererseits ist das zweite Substrat 10 während der Bestrahlung in Vorschubrichtung 12 bewegt worden, so dass sich eine Projektionslinie in Form eines Parallelogramms über die Oberfläche erstreckt, obwohl die Projektionsbewegungsrichtung 23 im Wesentlichen orthogonal zur Vorschubsrichtung 12 verlaufen ist. Die Bewegung des zweiten Substrates 10 in Vortriebsrichtung 12 hat somit zu einer passiveren Projektionsbewegung über die Oberfläche geführt. Durch die oberhalb beschriebene Fokussiereinrichtung ist die Breite der Projektionslinie 27 auf eine Projektionsbreite 26 von etwa 8 mm eingestellt worden.

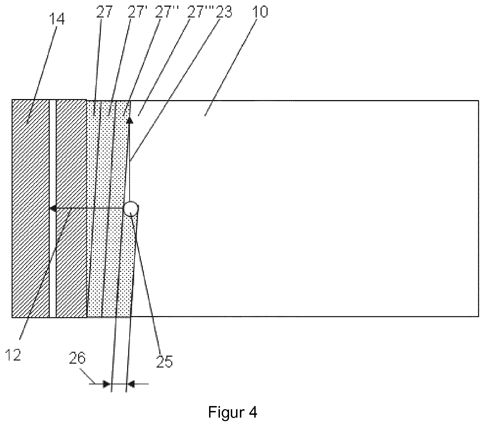

Figur 4 zeigt die Schnittansicht aus Figur 2 nach dem Ablauf eines Zeitraumes t2, der einem vielfachen des Zeitraums t1 aus Figur 3 entspricht, bei dem wie oberhalb beschrieben der Laserstrahl 17 derart über das zweite Substrat 10 geführt worden ist, dass in Figur 2 gezeigte Projektion 25 von der ersten Seite des Substrates 10 bis zur gegenüberliegenden zweiten Seite relativ zur Oberfläche mittels oberhalb beschriebener aktiven Projektionsbewegung bewegt worden ist. Durch den Einsatz des drehbar gelagerten Polygonspiegels 19 wird der Laserstrahl 17 nach Erreichen der zweiten Seite des Substrates 10 erneut an den Anfangspunkt auf der ersten Seite des Substrates 10 abgelenkt und wird von dort erneut über die Oberfläche geführt. Die Projektionsbewegungsrichtung 23 verläuft auch hier im Wesentlichen orthogonal zur Vorschubsrichtung 12. Dabei ist die in die Projektionsbreite 26, der Zeitspanne zwischen dem Erreichen zweier benachbarter Anfangspunkte auf der ersten Seite des Substrates 10 und der Bewegungsgeschwindigkeit des zweiten Substrates in Vorschubrichtung 12 derart gewählt, dass kein Punkt auf der Oberfläche doppelt bestrahlt wird, wobei die aus der über die Oberfläche bewegte Projektion 23 in der Zeit t2 entstehenden Projektionslinien 27, 27', 27", 27'" aneinander angrenzende Parallelogramme auf der Oberfläche des Substrates 10 darstellen. Ferner sind besagte Parameter derart gewählt, dass das zweite Substrat nach der Bestrahlung durch den Laserstrahl 17 an allen Punkten auf einer Linie orthogonal zur Vorschubsrichtung dieselbe Temperatur aufweist.

**Bezugszeichenliste :**

| | | | |
|---|---|---|---|
| 1 | Vorrichtung | 15 | Lagerwalze |
| 2 | Erstes Substrat | 16 | Lasereinheit |
| 3 | Vorratsspule | 17 | Laserstrahl |
| 4 | Klebstoffeinheit | 18 | Umlenkeinheit |
| 5 | Auftragsdüse | 19 | Polygonspiegel |
| 6 | Klebstoff | 20 | Strahlfalle |
| 7 | Klebstofffilm | 21 | Steuereinheit |
| 8 | Dosierrolle | 22 | Temperatursensor |
| 9 | Auftragsrolle | 23 | Projektionsbewegungsrichtung |
| 10 | Zweites Substrat | 24 | Winkel |
| 11 | Vorratsspule | 25 | Projektion |
| 12 | Vorschubrichtung | 26 | Projektionsbreite |
| 13 | Andrückeinheit | 27 | Projektionslinie |
| 14 | Andruckwalze | | |

## Patentansprüche

1. Verfahren zum vorzugsweise kontinuierlichen Verkleben von zwei Substraten (2, 10), wobei auf ein erstes Substrat (2) ein Klebstoff (6) aufgetragen wird, ein zweites folien-förmiges Substrat (10) aus einem thermoplastischen Kunststoff in eine Vorschubrichtung (12) transportiert und durch Erwärmung mit elektromagnetischer Strahlung in Form eines Laserstrahls (17) in einen erweichten Zustand überführt wird, wobei der Laserstrahl (17) winkelig hinsichtlich der Vorschubrichtung (12) über das zweite Substrat (10) geführt wird und wobei die mit dem Klebstoff (6) beschichtete Seite des ersten Substrats (2) mit der durch den Laserstrahl (17) bestrahlten Seite des zweiten Substrats (10) verklebt wird, **dadurch gekennzeichnet, dass** der Laserstrahl (17) über einen um eine Drehachse drehbar gelagerten Polygonspiegel (19) umgelenkt wird, gegebenenfalls vorher und/oder anschließend durch Fokussierungsmittel fokussiert wird und der fokussierte Laserstrahl (17) über das zweite Substrat (10) entlang einer Linie (27) geführt wird.

2. Verfahren nach Anspruch 1, **dadurch gekennzeichnet, dass** die beiden Substrate (2, 10) kontinuierlich verklebt werden, wobei der Laserstrahl (17) derart über das zweite Substrat (10) geführt wird und derart auf die Vorschubgeschwindigkeit abgestimmt ist, dass die Zeitspanne zwischen dem Auftreffen des Laserstrahls (17) und der anschließenden Verklebung für jeden Punkt der zu verklebenden Oberflache des zweiten Substrats (10) im Wesentlichen gleich ist.

3. Verfahren nach einem der Ansprüche 1 bis 2, **dadurch gekennzeichnet, dass** der Laserstrahl (17) im Wesentlichen linienförmig und/oder im Wesentlichen orthogonal zur Vorschubrichtung (12) über das zweite Substrat geführt wird.

4. Verfahren nach einem der Ansprüche 1 bis 3, **dadurch gekennzeichnet, dass** es sich bei dem Laserstrahl (17) um IR-Strahlung im Wellenlängenbereich von 0,8 bis 25 µm, bevorzugt 2,5 bis 25 µm, insbesondere bevorzugt von 2,5 bis 11 µm handelt.

5. Vorrichtung (1) zum vorzugsweise kontinuierlichen Verkleben eines ersten Substrats (2) mit einem zweiten folienförmigen Substrat (10) aus einem thermoplastischen Kunststoff, aufweisend
• eine Auftragsvorrichtung (4) zum Auftragen eines Klebstoffes (6) auf das erste Substrat (2);
• zumindest eine Vorschubeinrichtung (13) zum Transportieren zumindest des zweiten Substrates (10) in eine Vorschubrichtung (12);
• eine Heizvorrichtung (16) zum Erwärmen der Oberfläche des zweiten Substrates (10), die mit dem ersten Substrat (2) verklebt wird, wobei die Heizvorrichtung (16) derart ausgelegt und angeordnet ist, dass das zweite Substrat (10) durch Erwärmen in einen erweichten Zustand überführbar ist, wobei die Heizvorrichtung (16) einen eine elektromagnetische Strahlung in Form eines Laserstrahls (17) emittierenden Laser als Wärmequelle aufweist und wobei der Laserstrahl (17) zur Erwärmung des zweiten Substrates (10) derart geführt wird, dass dessen Projektion (25) auf der Oberfläche in einer Relativbewegung hinsichtlich der Oberfläche in eine Projektionsbewegungsrichtung (23) bewegt wird, wobei die Projektionsbewegungsrichtung (23) zumindest zeitweise winklig zur Vorschubrichtung (12) vorgesehen ist, um bei einer Bewegung des zweiten Substrates in Vorschubrichtung eine Erwärmung des zweiten Substrats vor dem Verkleben der beiden Substrate zu ermöglichen
• eine Andruckvorrichtung zum Andrücken der beiden Substrate nach dem Erwärmen des zweiten Substrates, **dadurch gekennzeichnet, dass** eine Strahlführungseinheit (18) vorgesehen ist, die den Laserstrahl (17) ablenkt und geeignet ist, die Projektion (25) über die Oberfläche zu führen.

6. Vorrichtung (1) nach Anspruch 5, **dadurch gekennzeichnet, dass** ein drehbar gelagerter Polygonspiegel (19) zur Umlenkung des Laserstrahls (17) vorgesehen ist, um die Projektion (25) zur Erwärmung über die Oberfläche zu führen.

7. Vorrichtung (1) nach einem der vorhergehenden Ansprüche, **dadurch gekennzeichnet, dass** eine Fokussiereinrichtung mit Fokussiermitteln vorgesehen ist, um den Laserstrahl (17) zu fokussieren.

8. Vorrichtung (1) nach einem der vorhergehenden Ansprüche, **dadurch gekennzeichnet, dass** die der Laser IR-Strahlung im Wellenlängenbereich von 0,8 bis 25 µm, bevorzugt von 2,5 bis 25 µm, insbesondere bevorzugt 2,5 bis 11 µm emittiert.

## Claims

1. A method for bonding, preferably continuously bonding, two substrates (2, 10), wherein an adhesive (6) is applied to a first substrate (2), a second film substrate (10) consisting of a thermoplastic material is transported in a feed direction (12) and converted into a plasticized state by heating with electromagnetic radiation in the form of a laser beam (17), wherein the laser beam (17) is guided over the second substrate (10) at an angle with regard to the feed direction (12), and wherein the side of the first substrate (2) which is coated with adhesive (6) is bonded onto the side of the second substrate (10) which has been irradiated by the laser beam (17), **characterized in that** the laser beam (17) is deflected by means of a polygonal mirror (19) which is rotatably mounted about an axis of rotation, optionally focused by focusing means beforehand and/or subsequently, and the focused laser beam (17) is guided along a line (27) over the second substrate (10).

2. The method according to claim 1, **characterized in that** the two substrates (2, 10) are bonded continuously, wherein the laser beam (17) is guided over the second substrate (10) and matched to a feed speed so that the time between impingement of the laser beam (17) and the subsequent bonding is substantially the same for each point of the surface of the second substrate (10) to be bonded.

3. The method according to either of claims 1 to 2, **characterized in that** the laser beam (17) is guided over the second substrate substantially linearly and/or substantially orthogonally to the feed direction (12).

4. The method according to any of claims 1 to 3, **characterized in that** the laser beam (17) is IR radiation in the wavelength range from 0.8 to 25 µm, preferably from 2.5 to 25 µm, more preferably from 2.5 to 11 µm.

5. A device (1) for bonding, preferably continuously bonding, a first substrate (2) to a second film substrate (10) consisting of a thermoplastic material, comprising
• application means (4) for applying an adhesive (6) to the first substrate (2);
• at least one feeding means (13) for transporting at least the second substrate (10) in a feed direction (12);
• heating means (16) for heating the surface of the second substrate (10) that is to be bonded to the first substrate (2), wherein said heating means (16) is designed and arranged in such a way that the second substrate (10) can be converted into a plasticized state by heating, wherein said heating means (16) has a laser emitting electromagnetic radiation in the form of a laser beam (17) as the heat source, and wherein the laser beam (17) is guided for heating the second substrate (10) in such a way that its projection (25) on the surface is moved in a relative movement with respect to the surface in a projection movement direction (23), wherein said projection movement direction (23) is at least temporarily provided at an angle with regard to the feed direction (12), to enable heating of the second substrate before the bonding of the two substrates when the second substrate is moved in the feed direction;
• pressing means for pressing the two substrates together after the second substrate has been heated, **characterized in that** a beam guiding unit (18) is provided that deflects the laser beam (17) and is adapted to guide the projection (25) over the surface.

6. The device (1) according to claim 5, **characterized in that** a polygonal mirror (19) which is rotatably mounted is provided for deflecting the laser beam (17) to guide the projection (25) over the surface for heating.

7. The device (1) according to any of the preceding claims, **characterized in that** focusing means with focusing elements are provided in order to focus the laser beam (17).

8. The device (1) according to any of the preceding claims, **characterized in that** said laser emits IR radiation in the wavelength range from 0.8 to 25 µm, preferably from 2.5 to 25 µm, more preferably from 2.5 to 11 µm.

## Revendications

1. Procédé pour le collage de préférence continu de deux substrats (2, 10), où un adhésif (6) est appliqué sur un premier substrat (2), un second substrat (10) en forme de feuille en une matière synthétique thermoplastique est transporté dans un sens d'avance (12) et amené dans un état ramolli par chauffage avec un rayonnement électromagnétique sous forme d'un faisceau laser (17), où le faisceau laser (17) est conduit sur le second substrat (10) sous un angle par rapport au sens d'avance (12) et où le côté du premier substrat (2) recouvert avec l'adhésif (6) est collé avec le côté du second substrat (10) irradié par le faisceau laser (17), **caractérisé en ce que** le faisceau laser (17) est dévié par le biais d'un miroir polygonal (19) monté de manière à pouvoir tourner autour d'un axe de rotation, est éventuellement focalisé avant et/ou après par des organes de focalisation et le faisceau laser (17) focalisé est conduit sur le second substrat (10) le long d'une ligne (27).

2. Procédé selon la revendication 1, **caractérisé en ce que** les deux substrats (2, 10) sont collés en continu, où le faisceau laser (17) est conduit sur le second substrat (10) de telle manière et est ajusté à la vitesse d'avance de telle manière que le laps de temps entre l'impact du faisceau laser (17) et le collage subséquent est sensiblement le même pour chaque point de la surface du second substrat (10) qui doit être collée.

3. Procédé selon l'une des revendications 1 à 2, **caractérisé en ce que** le faisceau laser (17) est conduit sur le second substrat sensiblement linéairement et/ou sensiblement perpendiculairement au sens d'avance (12).

4. Procédé selon l'une des revendications 1 à 3, **caractérisé en ce que** le faisceau laser (17) est un rayonnement IR dans le domaine de longueurs d'onde de 0,8 à 25 µm, de préférence 2,5 à 25 µm, de manière particulièrement préférée de 2,5 à 11 µm.

5. Dispositif (1) pour le collage de préférence continu d'un premier substrat (2) avec un second substrat (10) en forme de feuille en une matière synthétique thermoplastique, présentant
• un dispositif d'application (4) pour l'application d'un adhésif (6) sur le premier substrat (2) ;
• au moins un appareil d'avance (13) pour le transport d'au moins le second substrat (10) dans un sens d'avance (12) ;
• un dispositif de chauffage (16) pour le chauffage de la surface du second substrat (10) qui est collée avec le premier substrat (2), où le dispositif de chauffage (16) est dimensionné et agencé de telle manière que le second substrat (10) peut être amené par chauffage dans un état ramolli, où le dispositif de chauffage (16) présente comme source de chaleur un laser émettant un rayonnement électromagnétique sous forme d'un faisceau laser (17) et où le faisceau laser (17) est conduit pour le chauffage du second substrat (10) de telle manière que sa projection (25) sur la surface est déplacée dans un déplacement relatif par rapport à la surface dans un sens de déplacement de projection (23), où le sens de déplacement de projection (23) est prévu au moins par moments sous un angle par rapport au sens d'avance (12), pour permettre lors d'un déplacement du second substrat dans le sens d'avance un chauffage du second substrat avant le collage des deux substrats ;
• un dispositif presseur pour presser les deux substrats après le chauffage du second substrat, **caractérisé en ce qu'**il est prévu une unité de conduite de faisceau (18) qui dévie le faisceau laser (17) et est appropriée pour conduire la projection (25) sur la surface.

6. Dispositif (1) selon la revendication 5, **caractérisé en ce qu'**il est prévu un miroir polygonal (19) monté de manière à pouvoir tourner pour dévier le faisceau laser (17), pour conduire la projection (25) sur la surface pour le chauffage.

7. Dispositif (1) selon l'une des revendications précédentes, **caractérisé en ce qu'**il est prévu un appareil de focalisation avec des organes de focalisation pour focaliser le faisceau laser (17).

8. Dispositif (1) selon l'une des revendications précédentes, **caractérisé en ce que** le laser émet un rayonnement IR dans le domaine de longueurs d'onde de 0,8 à 25 µm, de préférence 2,5 à 25 µm, de manière particulièrement préférée 2,5 à 11 µm.
